# EUROPEAN PATENT SPECIFICATION

(11) **EP 2 604 552 B1**
(45) Date of publication and mention of the grant of the patent: **25.06.2014**
(21) Application number: 13158525.9
(22) Date of filing: 01.10.2008
(51) Int. Cl.: B65G 33/22, B65G 53/48

(54) **Apparatus for wetting particulate material**
VORRICHTUNG ZUR BENETZUNG VON TEILCHENFÖRMIGEM MATERIAL
DISPOSITIF DE MOUILLAGE DE MATIÈRE SOUS FORME DE PARTICULES

(30) Priority: 18.10.2007 GB 0720368; 26.02.2008 GB 0803454; 10.06.2008 GB 0810549
(43) Date of publication of application: 19.06.2013
(62) Divisional of application: 08840400.9
(73) Proprietor: BASF SE, 67056 Ludwigshafen (DE)
(72) Inventor: Holdsworth, Peter, Keighley, West Yorkshire (GB)
(74) Representative: Peatfield, Jeremy William

(56) References cited:
- US-A- 2 868 591
- US-A- 4 255 161
- US-A- 5 660 466

## Description

The present invention relates to an apparatus for forming an aqueous dilution or an aqueous solution of a water soluble or water swellable particulate material, as stated in the preamble of the apended claim 1 and disclosed in US-A-5 660 466.

Water-soluble or water swellable particulate materials, including polyelectrolyte powder and other similar granular powders of a hygroscopic nature are notoriously difficult to add to water in order to mix into homogenous aqueous solutions or aqueous dilutions. Such particulate materials if incorrectly added to water can stick to the make-up equipment and/or form lumps or agglomerates in the aqueous dilution or solution which do not dissolve. It is normally important that the solutions or dilutions are substantially homogenous since otherwise in various chemical treatment applications to which these solutions or dilutions are applied, the dosing equipment may become blocked or lumps/agglomerates may adversely affect the particular process.

Typically the water-soluble or water swellable materials will be hydrophilic polymers, especially high molecular weight polymers of ethylenically unsaturated monomers.

Since hydrophilic particulate material readily absorbs water and becomes sticky care has to be taken in the transfer of the material and also in the material wetting and make-up equipment. Desirably the particles of the material should remain as individual entities and hydrate separately. However, material wetting and make-up equipment can become blocked because the par ticulate material becomes hydrated prematurely. This can happen if particles stick to damp surfaces. Frequently this can happen in the proximity of the wetting equipment where water is combined with the particulate material, for instance where too much particulate material or agglomerated material is fed into the mixing equipment. This often results in this part of the equipment becoming blocked with gel or with layers of concretions which can stop the process and/or cause spillage of particulate material. Consequently, the operation will require regular maintenance.

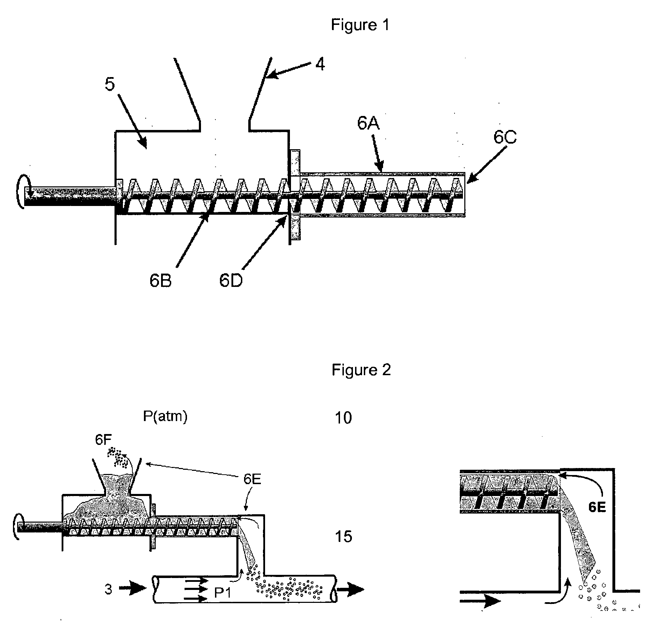

Most commercially available powder make up systems employ a screw feeder to meter the powder to the powder/water mixing process. This consists of an Archimedes Screw type auger or scroll connected to a drive motor as shown in Figure 1.

Some systems feed the powder by a screw action at a controlled rate directly into a wetting apparatus positioned directly below the screw feeder outlet tube. This type of system is described in US 4531673, US5344619 and US 5660466.

WO 2004/007894 describes a process for hydrating polymer to form a high concentration polymer gel or slurry for oil well applications. The polymer is screw fed into a venturi cyclone pre-wetting device and the wetted powder water mixture is passed through a high shear mixer and then into a blender. This system will tend to produce a very high viscosity polymer gel which is not fully hydrated.

In general where powder is fed by screw action directly into a wetting apparatus a controlled flow of water introduced into the wetting apparatus forms swirls and the powder falls on to the swirling water. The mixture of powder and water then fall by gravity into a mixing vessel. In some cases the powder/water mixture is pumped from the outlet of the apparatus into a mixing vessel. Such systems are prone to blockage in the apparatus and also prone to a build up of powder at the end of the scroll. Consequently the resulting aqueous solution or dilution is of poor quality since it can contain lumps or fish eyes. This will inevitably lead to inefficient use of the product and can adversely affect the efficiency of the process in which the solution or dilution is applied. This is especially so when the powder is a hydrophilic polymer, for instance a flocculant used in a flocculation type process.

US 5344619 describes an apparatus for dissolving polymer into water in which polymer is fed by means of a screw feeder from a storage hopper directly into the inlet of a wetting cone positioned vertically below the screw feeder outlet. This wetting device will typically be conical in shape or bowl shaped. Water is fed into the top of the cone in a way such that a swirl effect is achieved around the surfaces of the cone. Polymer falls onto the liquid surface and is carried to the bottom outlet of the cone, from where it is sucked into a liquid conveying line by the action of a water venturi. The water/polymer mix is conveyed by the momentum of the conveying water into a mixing tank, where it is mixed and aged before being transferred to a holding tank ready for dosing to the process.

With this equipment, the polymer storage hopper and screw feeder are in very close proximity to the water interface. Polymer is extremely hygroscopic, and such systems are prone to problems of caking of product, build up of sticky coatings on the feeder, build ups and blockages at the wetting cone. This particular reference attempts to address this by addition of a compressed air line directed past the screw feeder outlet to keep the outlet clean. Since compressed air produces a chill effect, in humid atmospheres this could facilitate condensation forming on metal surfaces with the consequence that the polymer would absorb the water and produce sticky agglomerates.

Some systems overcome the problems resulting from screw feeding hygroscopic powder directly into the wetting apparatus by locating the screw feeder remotely such that the screw feeder remains dry. This can be achieved by delivering the particulate material from the screw feeder into an air transfer line in which the particulate material is conveyed to the wetting device pneumatically. In this case the screw feeder can be positioned above a small intermediate hopper. In one instance hopper outlet leads to a venturi eductor and conveying line. An air blower injects atmospheric air through the venturi and this creates suction at the hopper outlet. Since the powder falls into the hopper by the action of gravity it is sucked into the air conveying line and transported to the wetting device where it is hydrated before falling into an agitated vessel. However, although use of a venturi eductor with an air conveying line avoids the aforementioned problems associated with screw feeding directly into the wetting apparatus, there are nonetheless disadvantages with this type of system.
- The use of a venturi is very energy consuming, and large air blowers are required for the application.
- Both the air blower and the venturi create excessive noise.
- The conveying distances are limited because of the energy loss at the venturi.
- The venturi also sucks in atmospheric air at the small hopper and this can create a chilling effect and in humid atmospheres cause condensation to form on metal surfaces which will be absorbed by the hygroscopic powder resulting in agglomerations. This can happen even if the hopper is heated since the agglomerations can form in the scroll.
- The venturi aperture through which air and powder pass is small and susceptible to blockages from lumps (a build up agglomerated powder that can fall from the scroll) or tramp material. If a blockage occurs and goes undetected, this can cause powder to blow back from the small hopper and cause a mess around the unit.

It is also known to use a blowing valve (rotary valve) in place of a venturi system. However, such a system can also present disadvantages. In particular blowing valves are difficult to obtain for smaller powder feeding units and in any case are expensive. Furthermore, it is often difficult to calibrate the powder feed rate and there can be a variation in the powder feed rate which is dependent on the pressure in the conveying line. An additional problem with such a system is that large volumes of conveying air can bleed back through the blowing valve into the powder storage hopper which can reduce conveying efficiency and create dust which would necessitate employing an air filter system on the hopper.

An objective of the present invention is to provide an apparatus in which water soluble or water swellable particulate material, in particular polymeric material, is hydrated or dissolved in water form and aqueous dilution or aqueous solution and avoiding any of the aforementioned disadvantages. In particular, it is desirable to provide an apparatus which avoids blockages and provides homogenous solutions or dilutions substantially without lumps, agglomerates or fish eyes. A particularly preferred objective is that this is all achieved cost effectively and without creating any dusting problems.

The present invention relates to an apparatus for forming an aqueous dilution or aqueous solution of a water-soluble or water swellable particulate material as stated in the appended claim 1.

We have found that the apparatus allows the metering of hygroscopic granular powders, such as water-soluble or water swellable polymers, into an air conveying line to a wetting apparatus where the hygroscopic powders can be wetted out and combined with water form a homogenous solution or dilution.

A further aspect not part of the invention relates to a method of forming an aqueous dilution or aqueous solution of a water soluble or swellable material comprising:
providing an apparatus that comprises:
   a scroll conveying line (6) comprising a duct (6A) defined by a wall and a scroll conveyor (6B) within said duct, wherein the scroll conveying line has an inlet (6D) through which material enters an outlet (6C) through which the material leaves the scroll conveying line, and
   an air conveying line (3) comprising a duct through which an air stream conveys the material to a make up unit (18) in which the material is hydrated or dissolved to form a uniform aqueous dilution or aqueous solution,
   in which the scroll conveying line (6) is provided with a means for ensuring the material substantially fills the space between the scroll conveyor and the wall of the duct at least at the outlet end of the conveying line,
   wherein the means is selected from,
      (a) the scroll conveying line (6) or the outlet (6C) is in communication with an element that restricts the flow of material from the outlet, and/or
      (b) the scroll conveying line (6) is mounted at a gradient or a substantially vertical orientation, such that the outlet (6C) is positioned higher than the inlet,
   feeding the particulate material into the scroll conveying line inlet (6A), transferring the material through the scroll conveying line to the outlet (6C), allowing the material to enter the air conveying line (3) in which an air stream conveys the material to a make up unit (18) in which the material is hydrated or dissolved to form a uniform aqueous dilution or aqueous solution.

Figure 1 shows a vertical cross-section of a scroll conveying line with powder storage hopper mounted over a screw feeder box at the inlet of the scroll conveying line.
Figure 2 shows a vertical cross-section of the scroll conveying line connected to a vertical shaft which leads to the air conveying line in which the scroll conveying line is without any means for ensuring particulate material fills the between scroll and the duct. An enlargement of the scroll conveying line outlet is also shown.
Figure 3 shows a vertical cross-section of the apparatus showing the scroll conveying line leading via a vertical shaft to an air conveying line which leads to a make up unit. The outlet to scroll conveying line contains a suitable means (not shown) for ensuring particulate material fills the between scroll and the duct.
Figure 4 shows a vertical cross-section of the apparatus where the means in communication with the outlet of the scroll conveying line is a weir.
Figure 5 shows a vertical cross-section of the apparatus in which the means in communication with the outlet of the scroll conveying line is a compression element.
Figure 6 shows a vertical cross-section of the apparatus in which the means in communication with the outlet of the scroll conveying line is a flexible element.
Figure 7 shows a vertical cross-section of the apparatus in which the means in communication with the outlet of the scroll conveying line is a hinged flap.
Figure 8 shows a vertical cross-section of the apparatus in which the means is that the scroll conveying line is mounted at a gradient such that the outlet is above the inlet.
Figure 9 shows a vertical cross-section of the apparatus in which a flow of air has entered the shaft (in the case illustrated the means in communication with the outlet of the scroll conveying line is a weir).
Figure 10 shows a vertical cross-section of the apparatus in which a deflector is located at the lower end of the shaft in which a flow of air is prevented from entering the shaft (in the case illustrated the means in communication with the outlet of the scroll conveying line is a weir).

The scroll conveying line outlet may open directly into the air conveying line. However, in one form of invention it is preferred if the scroll conveying air outlet opens into a shaft which connects with the air conveying line. More preferably the shaft is orientated such that the material can flow downwards and into the air conveying line. More preferably still the shaft is substantially vertical. In general the shaft will only contain two openings, namely the scroll conveying line outlet and the opening where the lower end of the shaft connected to the air conveying line. In this regard the shaft may be regarded as a closed system.

The scroll conveying line may be located in any orientation about a vertical axis with regard to the air conveying line. In one form the scroll conveying line is in line with the air conveying line. In an alternative form the scroll conveying line may be conveniently arranged such that it is substantially 90 degrees about a vertical axis in relation to the air conveying line.

The means for ensuring that the particulate material substantially fills the space between the scroll conveyer and the wall of the duct at least at the outlet end of the conveying line may be any suitable means selected from either (a) employing an element which is in communication with the scroll conveying line (6) or the outlet (6C) and restricts the flow of the material or (b) mounting the scroll conveying line at a gradient or in a substantially vertical orientation, such that the outlet (6C) is positioned higher than the inlet (6A).

The means for restricting the flow of material will normally be a constricting member which provides the scroll conveying line or outlet with a cross-sectional area less than the cross-sectional area of the scroll conveying line or outlet without the constricting member. The constricting member may reduce the cross-sectional area by a significant amount. Generally this concentrating member will obstruction at least 5 or 10% of the cross-sectional area and usually more. The constricting member may cover as much as 80 or 85% or more of the area of the scroll conveying line or outlet. Typically this can be between 15 and 75%, for instance between 20 and 70%.

This means tends to prevent air from the air conveying line to escape through the scroll conveying line and out through the inlet. Furthermore, it appears that this means also induces compression of an action of the particulate material within at least at outlet end of scroll conveying line.

This appears to have the advantage that the material is more efficiently conveyed to the wetting apparatus without any loss of air pressure and furthermore material, for instance material fines, is not blown from the inlet to the scroll conveying line and where fitted a material supply container (for instance a hopper) which would create a dusting problem and tend to blow even larger size material out of the apparatus. Furthermore, the hygroscopic material is successfully conveyed to the wetting apparatus without suffering the problems of agglomeration formation and/or blockage of the apparatus. The apparatus also enables the formation of aqueous solutions or dilutions that are substantially homogenous and substantially free from lumps, agglomerates or fish eyes.

Figure 2 demonstrates that where the scroll conveying line has no means for inducing filling of the space between the scroll and it in a wall of the duct allows the escape of air (6E) through the scroll conveying line and through the powder storage hopper creating a dusting problem (6F).

The air conveying line will desirably be provided with an air flow rate and pressure rated suit the particular application. In general this will be sufficient flow rate and pressure to carry the particulate material to the make up unit. Normally the rate will be at least 10 m³/h, for instance up to 300 m³/h or more, but usually not more than 400 m³/h. Often the rate will be at least 100 or 200 m³/h. In general the air pressure will be at least 20 milli-Bar (2,000 pascals), frequently at least 50 milli-Bar (5,000 pascals) but usually not more than 500 milli-Bar (50,000 pascals). Preferably the air pressure will be up to 200 milli-Bar (20,000 pascals) and more preferably up to 150 milli-Bar (15,000 pascals).

Preferably the air conveying line will comprise a conduit that has an inner surface which has antistatic properties. This may be achieved by constructing the air conveying line from an antistatic material or alternatively by applying an antistatic surface covering to the inner wall of the air conveying conduit. The antistatic inner surface prevents static discharge sparks and also prevents particles of the material being conveyed sticking to the inner surface. Suitable antistatic surface coverings are commercially available.

Typically the air conveying line will comprise a conduit suitable for transporting the particles to the make up unit. Typically such a conduit will have an inner diameter of at least 30 or 40 mm or 50 mm and is some cases as much as 80 mm or even 100 mm. Usually the inner diameter will be in the range of the between 50 mm or 55 mm to 75 mm or 80 mm. The air conveying line may be constructed from a flexible or rigid material. This can for instance be plastic, rubber or metal etc.

The choice of air pump and air conveying line will be chosen to give a suitable flow of the particulate material. Generally this will be chosen to provide a flow rate of between 1 and 70 m/s. Typically this will be in the range of 5 to 45 m/s, especially for particulate water-soluble or water swellable polymers, including polyelectrolytes. In some cases it may be desirable for this to be below 25 m/s.

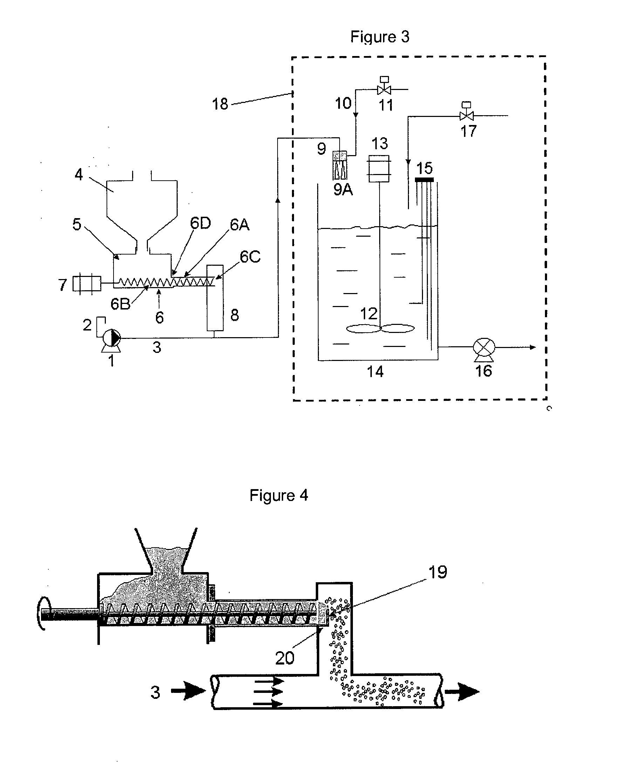

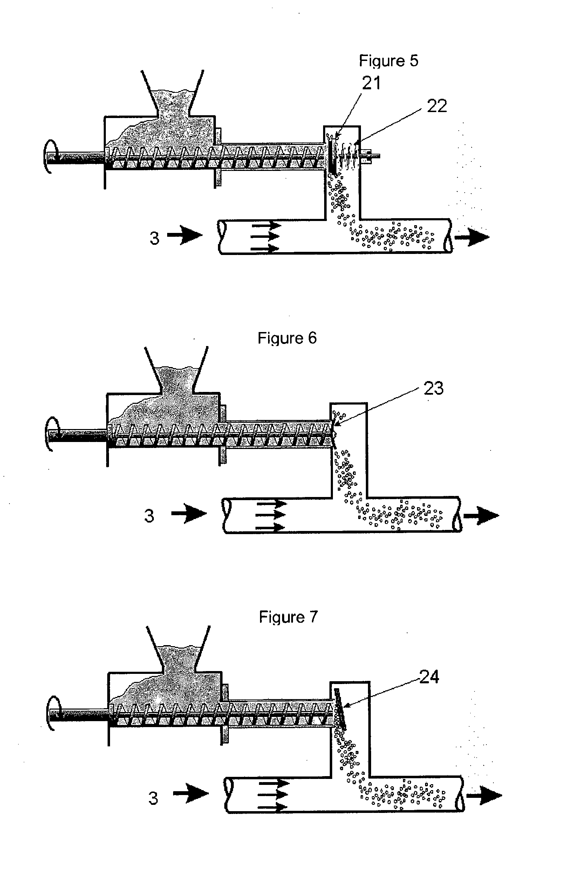

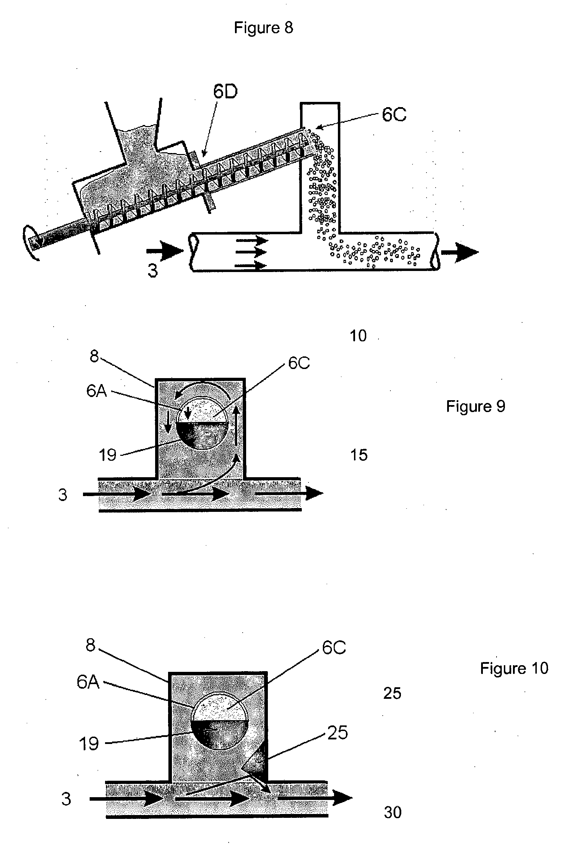

In some cases, typically when the air conveying line has a diameter of below 50 mm and the airflow exceeds 25 m/s, a small proportion of air passes into the shaft (8) and creates an air vortex within the shaft chamber. This is illustrated in figure 9. When the particulate material is being conveyed from the conveying line into the shaft the air vortex appears to have no detrimental effect. In fact this may even have a beneficial effect of scouring the inside surfaces of the shaft and preventing powder from sticking to the walls. However, when the particulate material is not being conveyed in certain cases the vortex may remove particulate material from the end of the scroll conveying line. Usually this would only be relevant where the means is according to the specific embodiments including the weir illustrated in figure 4, the flap illustrated in figure 7 and the inclined scroll conveying line illustrated in figure 8. In extreme cases there is a risk that all of the particulate material present in the space between the scroll conveyor and the duct surrounding the scroll conveyor is removed by the air vortex. In such a circumstance the air sealing effect within the scroll conveying line (6) would be compromised.

Therefore where the air conveying line (3) has a diameter of below 50 mm it is generally desirable to maintain an air flow of below 25 m/s, or at least adjusting the airflow accordingly when the conveying of particulate material stops.

Furthermore, in some cases when the diameter of the air conveying line is around 80 mm or greater it is also possible that an air vortex develops in the shaft (see figure 9). This would risk the same disadvantages as described above when the conveying of particulate material stops.

Unexpectedly we have found that when the air conveying line is around 80 mm or greater in diameter the inclusion of a deflector (25) located at the base of the shaft on the shaft wall opposite to the direction of the flow of the air and the airflow is maintained below 25 m/s and air vortex is prevented from developing in the shaft. This is illustrated in figure 10. The deflector redirects sufficient of the airflow that would otherwise have entered the shaft in order to prevent the formation of an air vortex of any significant strength.

The deflector may be formed by the addition of a machined component which fits into the base of the shaft onto the shaft wall opposite to the direction of the air flow in the air conveying line. Alternatively the deflector may be built into the design of the shaft (8) by shaping, or angling or curving of the wall. When the deflector is a machined component it can for instance be a plate, baffle or a prism which has a base that fits into the cylindrical wall of the shaft.

Typically the deflector may be constructed from the same or similar material as the shaft or scroll conveying line. In any case it is generally constructed from a hard durable material such as metal or metal alloy.

Preferably the deflector will extend across the diameter of the shaft such that at least 5% and as much as 60%, frequently between 10 and 50%, preferably between 15 and 30% of the cross-sectional area is covered by the deflector. Alternatively the deflector extends across shaft such that the cross-section distance between the shaft wall closest to the direction of airflow in the air conveying line and the deflector may be at least 10 mm and can be as much as 100 mm or more but usually between 50 and 80 mm, preferably between 55 and 75 mm.

Where the means is an element which is in communication with the scroll conveying line (6) or the outlet (6C) it may for instance be an element that partially obstructs said outlet or said scroll conveying line after the end of the scroll thereby restricting the flow of material or alternatively a flexible member that fits substantially over the outlet thereby restricting the flow of material.

In one particularly preferred form of the invention the scroll conveying line (6) or the outlet (6C) is in communication with a weir (19) over which the material must pass. The weir may be an annular member with an orifice of diameter less than the diameter of the scroll conveying line in which the annular member sits within the scroll conveying line after the end of the scroll or could be fitted to the end of the scroll conveying line at the outlet. The orifice would normally be concentric with the scroll conveying line although alternatively it may be the annular member may be fitted with an orifice in an eccentric position.

Alternatively the weir may be in the form of a wall or dam which fits across a portion of the scroll conveying line after the scroll or the outlet. Usually this type of weir will be located across the lower part of the scroll conveying line after the scroll or across the lower part of the outlet. The weir may be in the form of a substantially vertical wall which is located across the scroll conveying line or outlet. Alternatively the weir could be in the form of a wall that is angled such that the face of a wall facing the scroll forms an angle with the base of the scroll conveying line or outlet greater than 90 degrees and less than 180 degrees, usually between 90 and 135 degrees. In another form the weir may be a wall which has an angled face facing the scroll and a substantially vertical face facing the opposite direction. In one form the weir may be a prism shape.

A suitable representation is shown in figure 4. The weir serves to restrict the flow of material and causes material to essentially fill the space between the scroll and the inner wall of the conveying line. The weir may be at least a significant proportion of the area of the outlet. Generally this will be at least 5 or 10% and usually more. The weir may be as much as 80 or 85% or more of the area of the outlet. Typically this can be between 15 and 75%, for instance between 20 and 70%. The weir may be located substantially at the outlet or at least the end of the scroll.

Alternatively, the weir may be located in a position extended from the end of the scroll or scroll conveying line. When the weir is located as such it may be connected to the scroll conveying line by means of a connecting element (20). The position of the weir from the end of the scroll or scroll conveying line may vary depending on the material that is being conveyed and also the conveying rate. It will also depend upon the diameter of the scroll conveying line. For instance the distance of the weir from the end of the scroll all the scroll conveying line will typically be between 0 and 500 mm for a scroll conveying line diameter of up to 51 mm.

Typically the weir, and the connecting element where included, would be made of a suitable material that is preferably rigid. Usually this will be metallic, for instance iron or steel. In general the weir and connecting element would have a thickness of at least 3 mm and usually not more than 10 mm.

In another preferred form of the invention the outlet (6C) is in communication with a compression element (21). A suitable representation is shown in figure 5. The compression element should substantially cover the outlet and in which the compression element is held in place by means of a compression member (22). The compression element provides controlled axial restriction by being positioned at the end of the scroll conveying line at the outlet. In this way the flow of the particulate material from the scroll conveying line is restricted and induces the particulate material to substantially fill the void between the scroll and the inner wall of the scroll conveying line at least at the outlet end. The compression element may be any suitable shape that substantially covers the end of the outlet. It may for instance the square, rectangular, triangular, hexagonal, octagonal or any other shape but preferably it is substantially circular. The compression element may be made of any suitable substance that provides sufficient rigidity to provide the required restricted flow when held in place by the compression member (22). The substance used to make the compression element may be slightly flexible or slightly elastic but in general will be substantially rigid. Suitably the compression element can be made from metal, plastic, rubber etc but preferably is made from metal. Preferably the compression element will be made from a metal plate, typically of at least 3 mm but usually not more than 10 mm. More preferably the compression element would have a rubber facing covering the metal plate. Typically such a rubber facing will range between 0.25 mm to 1 or 2 mm.

The compression member (22) should provide sufficient force to hold the compression element substantially over the outlet (6C), but to allow sufficient movement of the compression element (21) to allow restricted flow of the particulate material from the outlet. The compression member may allow movement in any dimension, for instance lateral, upward or downward movement in relation to the axis of the scroll. However, it is preferred that the movement of the compression element is substantially in line with the axis of the scroll. Suitably the compression member is selected from any of the group consisting of a spring action, pneumatic action, hydraulic action and electrically generated action, provided that it exerts sufficient force on the compression element to enable restricted flow as specified above. Preferably, the compression member comprises a spring action. Suitably the compression member will provide an axial force in the range of between 2 Newtons and 20 Newtons Force.

In a further preferred embodiment of the present invention the outlet (6C) is in communication with a flexible element (23). An example of this is shown in figure 6. Desirably the flexible element substantially covers the outlet and in which the flexible element is mounted at the end of the scroll conveyor (6B) in order to hold the flexible element substantially over the outlet (6C). There should be sufficient movement possible in the flexible element to allow restricted flow of the material from the outlet. As given previously such restricted flow should enable the particulate material to fill the void between the scroll conveyor and the inner wall of the scroll conveying line at least at the outlet end of the conveying line. Suitably the flexible element can be made of any suitable flexible or elastic substance provided that the element exhibits sufficient flexibility to allow it to flex sufficient to allow the particulate material around it and yet for it to return to his original position substantially covering the outlet. Typically the flexible element can be instructed from any of rubber, flexible plastic or spring metal.

In a still further preferred form of the invention the outlet (6C) is in communication with a hinged flap (24). An exemplification of this can be found in figure 7. The hinged flap should substantially cover the outlet and held in position by means of gravity or a compression member which provides sufficient force to hold the hinged flap substantially over the outlet (6C) and yet allow sufficient movement of the hinged flap to allow restricted flow of the particulate material from the outlet. As given previously such restricted flow should enable the particulate material to fill the void between the scroll conveyor and the inner wall of the scroll conveying line at least at the outlet end of the conveying line. Where the flap is hinged from above the outlet in the flap may be operated by means of gravity. This gravity weighting may be achieved by employing a flap of sufficient mass or by affixing a suitable weight to the flap sufficient to enable the flap to close over the outlet (6C) and yet allow restricted flow of the particulate material from the outlet. Where gravity weighting is employed the hinged flap should have a mass of in the region of at least 150 g and usually at least 200 g. The mass may be as much as 1 or 2 kg but is usually below this. By requiring that the hinged flap has the above stated mass either the hinged flap is instructed of a material which will provide the required mass or a suitable weight is attached to the hinged flap. In general the hinged flap will be of a rigid construction usually a metal, such as iron or steel. Generally it will have a thickness of at least 3 mm and usually not more than 10 mm. As given previously this restricted flow should enable the void between the scroll conveyor and the inner wall of the scroll conveying line to be substantially filled at least at the outlet end.

As an alternative to gravity weighting in the hinged flap may be mechanically operated by use of a compression member. In this form the flap may be hinged from any position around the outlet, for instance above, below or to the side of the outlet. Suitably the compression member is selected from any of the group consisting of a spring action, pneumatic action, hydraulic action and electrically generated action, provided that it exerts sufficient force on the compression element to enable restricted flow as specified above. Preferably, the compression member comprises a spring action. The compression member may be as defined above in regard to the compression element.

In yet another preferred embodiment the means provided for ensuring that the material substantially fills space between the scroll conveyor and the wall of the duct comprises mounting scroll conveying line (6) as a gradient or a substantially vertical orientation, such that the outlet (6C) is positioned higher than the inlet which feeds the particulate material into the scroll conveying line inlet (6A). An example of this is embodiment is given in Figure 8.

The scroll conveying line may be orientated at any suitable angle from horizontal in order to facilitate the particulate material to fill the void between the scroll conveyor and the duct. Typically this will be an angle of 20° to 60° and preferably between 25° and 50°.

In a further form of the invention the means for ensuring the material substantially fills the space between the scroll conveyor and the wall of the duct at least at the outlet end of the conveying line comprises both
(a) the scroll conveying line (6) or the outlet (6C) is in communication with an element that restricts the flow of material from the outlet, and/or
(b) the scroll conveying line (6) is mounted at a gradient or a substantially vertical orientation, such that the outlet (6C) is positioned higher than the inlet (6D).

Thus any of the aforementioned forms of the invention in which an element that restricts the flow of material is included may be used in combination with mounting the scroll conveying line at a gradient or a substantially vertical orientation.

In a still further form of the invention the means for ensuring the material substantially fills the space between the scroll conveyor and the wall of the duct is at least two of the aforementioned elements that restrict the flow of material from the outlet. One particularly preferred combination is where the means incorporates providing the scroll conveying line or outlet with a weir (19) in addition to the outlet (6C) being in communication with a hinged flap (24).

In any of form of the invention the scroll conveyor is often a screw feeding mechanism typically consisting of a single feed scroll. Nevertheless, it may be desirable to employ multiple scrolls especially for particulate material which is difficult to convey using a single scroll.

In order to assist the flow of the particulate material from the storage and feeder through to the make up unit it may be desirable to install bridge breakers and/or vibrator devices. Control and alarm sensors may be incorporated, including but not limited to level sensors in the storage hopper (4), feeder box (5), and shaft (8). It may also be desirable to include pressure or flow sensors in the air conveying line (3).

It is particularly desirable that the scroll conveying line is substantially entirely full of particulate material during the operation of the apparatus. It is also particularly preferred that the powder is compressed sufficiently to create an air seal. Nevertheless, the means for inducing filling of the space between the scroll conveyor and inner wall of the duct should be adjusted in such a way so as not to overcompress the particulate material since this would cause friction and overheating or jamming of the scroll conveyor.

Preferably scroll conveyor should be of a solid construction containing a solid member through the central axis since this is more likely to allow filling and appropriate compaction within the scroll conveying line. A scroll conveyor constructed in an open helix (coil spring like) may not be as desirable as the scroll of solid construction since it may not provide the ability to allow filling and compaction of the particulate material to the same extent.

In any of the forms of the apparatus defined above it may be desirable for the pitch of the scroll conveyor (6B) to reduce from the inlet to the outlet. Preferably, the pitch of the scroll will gradually reduce from the drive end, closest to the inlet, to the outlet end. We have found that this has the effect of compressing the powder as it is being screwed towards the outlet. This assists in preventing escape of air through the scroll contain line which also prevents loss of pressure in the air conveying line. Although this decreasing in pitch may be applied to any of the aforementioned forms of the apparatus, it is preferred that it is applied to the aforementioned form of the invention in which the scroll conveying line is mounted at a gradient or vertically.

The make up unit can be any piece of equipment in which the material is hydrated or dissolved the form an aqueous dilution or aqueous solution. Generally the make up unit will incorporate equipment that brings about wetting of the polymer particles and then mixing to hydrate the polymer such that it either dissolves or at least forms an aqueous dilution. Such make up units may also be termed making down units or hydration module.

Suitably the make up unit will comprise a material wetting head (9) which is for contacting the water-soluble or water swellable particulate material with water, and a mixing vessel (14). The particulate material is hydrated or dissolved should be hydrated or dissolved to form a uniform aqueous dilution or aqueous solution. In general water-soluble particulate material will dissolve to form an aqueous solution whereas water swellable particulate material which is water insoluble will hydrated to form a uniform aqueous dilution.

More preferably the make up unit of the apparatus will have a material wetting head (9) which comprises:
a substantially vertical wetting duct (9A) which is open at its lower end,
a duct inlet which is at the upper end of the wetting duct (9A) and substantially coaxial with the duct.

In this preferred form the particulate material is supplied to the to the duct inlet from the air conveying line (3). Water spray orifices may be positioned within the upper part of the wetting duct radially outwards of the duct inlet and arranged in such a way so as to direct sprays of water downwardly in the wetting duct in order to wet the particulate material. Furthermore, in this preferred form there is a means for providing a supply of water to the water spray orifices.

Suitable material make up units are available commercially and may be used in conjunction with the present invention. In general these will all include material wetting heads. Suitable wetting heads are for instance described in US 4086663 and US 5660466. Another example of a make up unit is described in WO 02/092206.

The water-soluble or water swellable particulate material may be any material that is normally combined with water to make an aqueous solution or an aqueous dilution. Preferably this will be a water-soluble or water swellable polymer. Typically the polymer may be a synthetic polymer or a natural polymer. Natural polymers will include polysaccharides, for instance particulate starch, Guar gum, dextran and xanthan gum etc. Preferably the polymer will be synthetic and usually formed from ethylenically unsaturated monomers and usually will have a relatively high molecular weight. Suitable polymers include acrylamide polymers including homopolymers and copolymers of acrylamide with anionic monomers such as acrylic acid, methacrylic acid, 2-acrylamido-2-propane sulphonic acid and the like and copolymers of acrylamide with cationic monomers such as di alkyl amino alkyl (meth) acrylate, di alkyl amino alkyl (meth) acrylamide including quaternary ammonium salts etc.

The polymers may be in the form of beads or powder. Typically the particle size distribution within the polymer may range from 20 microns to 2000 microns and often between 15 microns and 1500 microns. Often the weight average particle size distribution will be no higher than 2000 microns and often be between 800 microns and 1500 microns.

One typical apparatus for providing an aqueous solution or dilution of a water-soluble or water swellable particulate material contains a powder storage hopper (4) mounted above a screw feeder box (5) onto the inlet (6D) of a scroll conveying line (6). The scroll conveying line contains a scroll conveyor (6B) which is powered by a drive motor (7). The scroll conveyor is located within a duct (6A) defined by a wall and an outlet (6C) through which particulate material exits the scroll conveying line. The scroll conveying line opens into a shaft (8) down which the particulate material can fall by gravity into an air conveying line (3) through which air is pumped by means of a blower (1) into which air is fed through an air inlet (2). The inlet can be adapted in such a way to prevent the ingress of damp air and tramp material. The air conveying line transports the particulate material to a material make up unit (18). The material make up unit has a wetting head (9) into which the air conveying line feeds particulate material through the other end centrally. The wetting head is supplied water through water feed line (10) by means of water pump (11). The particulate material and water are combined within the wetting head and the wetted particles and water fall by means of gravity into a tank (14) which is mixed by means of agitator (12) powered by drive motor (13). The make up unit may also contain an additional water feed (17). An aqueous solution or dilution of the particulate material can be removed from the tank (14) through an aqueous product feed line by means of pump (16).

The process employing said apparatus of the present invention may also be automated. This can be for instance controlled by level sensors (15) in the tank. This may be a series of conductive level probes, or a pressure sensor at the bottom of the vessel, or ultrasonic/radar device, or by various pressures which is mounted in the vessel. This may be operated such that when the particulate material is correctly dispersed or dissolved, a pump (16) would transfer the solution or dilution to a holding vessel. Typically the pump (16) may be substituted by an actuated valve in the case where gravity transfer is used. In the case of a continuous process the pump (16) may be a pump that doses the solution to a process.

In one typical method of employing the invention in a batch type process and starting with an empty mixing vessel (tank) (14), the blower (1) will start and the water valve (11) will open allow-ing a water flow through the water line (10) and wetting head (9). If required, a rapid fill water supply (17) will also start to fill the vessel. The blower (1) will preferably run at this stage in order to prevent the tendency of conveying line to otherwise become damp.

The liquid level in the vessel (14) is monitored by the level controls (15) and when the liquid level in the vessel covers the agitator (12), if employed, the rapid fill system (17) will shut down, screw conveying line drive pump (7) will start and drive the scroll conveyor (6B) will start to feed the particulate material into the conveying line (3), and the agitator (12) will start. The strength of the aqueous solution or dilution will depend on volume of water added to the vessel and the weight of the particulate material fed to the vessel. The water volume is controlled by the level controls (15) and the amount of powder may be controlled by a feed timer or may be controlled by a loss of weight in the powder storage hopper. A loss of weight system normally employs mounting the powder storage hopper on load cells.

The particulate material and water will continue to be fed to the vessel until the prescribed quantity of the powder has been added, at which point the scroll conveyor (6B) will stop. At this point, if employed, the rapid fill (17) will restart. When the liquid level in the vessel reaches a predetermined high level, the water valve (11) and if employed, the rapid fill (17) will shut off, and the blower (1) will stop. After a preset time sufficient to allow the solution or dilution to homogenise or age the agitator (12) will stop. If the storage vessel is empty, the mixed and age solution will be transferred by pump (16) to the storage vessel. The above cycle will then repeat.

In another typical process of operating the apparatus a continuous mixing system may be employed. Such a continuous mixing system, particulate material will be drawn from the mixing vessel (14) by the pump (16), and the level in the vessel will fall. Typically for this type of process, the blower (1) and agitator (12) will run continuously, or these may have a cut out timer to stop them in the event of a fill cycle not happening for a preset time. When the liquid level reaches a predetermined point, the water valve (11), and if employed, the rapid fill (17) will start, and after a preset delay (e.g. 1 to 10 seconds), the scroll conveyor (6B) will start, & powder will be transported via the conveying line (3) to be wetted out by the wetting head (9) before falling into the mixing vessel. For the continuous process, total water flow and powder feed rate are fixed values.

When the liquid reaches a predetermined high level, the scroll conveyor (6B) stops, and after a preset delay time (seconds), the water valve (11), and if employed, the rapid fill (17) closes. The above cycle repeats.

The following example further illustrates the invention.

### Example

For the following example, item part numbers refer to schematic Fig.3.

### a) Typical high capacity polymer batch make up system using powder venturi eductor, & pneumatic powder conveying.

Example Specification:
- 40m³ mixing tank (14) complete with an agitator (12 & 13)
- 50m³/h rated transfer pump (16).
- 500 Ipm water feed (10 & 11) to the wetting head (9)
- 1000 l/m rapid fill line (17).
- Blower (1) 7.5 kW
- 50mm NB feeder (6) - maximum feed due to conveying constraints 3.5kg/min.
- 3" NB (76mm), maximum conveying line distance 15 m.

Assuming the above specifications, the batch cycle time to mix and transfer a 0.5% solution of polyelectrolyte for this system is nominally 176.6 minutes, giving an average throughput capacity of 68 kg/h of powder. This is based on an ageing time of 60 minutes after the level in the mixing tank reaches high level. The rapid fill only runs when powder is not being fed.

Typically, the noise of this system measured at 1 m distance is >=84dB(A).

### b) Invention.

If we use the same basic equipment and parameters as (1 a) above and modify to the new screw feeder:
- The transition piece (8), the venturi eductor is removed & replaced by a plain connection passage.
- The blower (1) is replaced by a 1.3kw blower.
- The conveying line (3) is replaced by 2" NB (51mm NB) pipe.

With this set up, the screw feeder rate can be raised to >= 5 kg/min, the conveying distance can be raised to 30m.

The batch cycle time to mix and transfer a 0.5% solution of polyelectrolyte for this system is now nominally 168 minutes, giving an average throughput capacity of 71.4 kg/h of powder. This is based on an ageing time of 60 minutes after the level in the mixing tank reaches high level. The rapid fill only runs when powder is not being fed.

The noise of this feeder system measured at 1 m distance is <=74 dB(A).

### c) Advantages of the invention in the above example:

- smaller blower gives 82% reduction in power consumption (kWh) for this item.
- smaller blower gives 86% cost saving on this item
- smaller diameter conveying line gives 35% cost saving per metre on this item.
- Conveying line limit can be increased by 100% in length.
- Noise reduced from 84 to 74 dB(A)
- Average throughput of powder is increased by 4.8%
- Removal of venturi assembly cf. increased cost of feeder modifications cost neutral.

## Claims

1. Apparatus for forming an aqueous dilution or aqueous solution of a water-soluble or water swellable particulate material in which the material is a water-soluble or water swellable polymer with a weight average particle size of no more than 2000 µm, comprising:
a make up unit (18),
a scroll conveying line (6) comprising a duct (6A) defined by a wall and a scroll conveyor (6B) within said duct, wherein the scroll conveying line has an inlet (6D) through which material enters and an outlet (6C) through which the material leaves the scroll conveying line, and
an air conveying line (3) comprising a duct through which an air stream conveys the material to the make up unit (18) in which the material is hydrated or dissolved to form an aqueous dilution or aqueous solution, **characterized in that**
the air conveying line is provided with an air pressure of at least 20 milli Bar, and
**in that** the scroll conveying line (6) is provided with a means for ensuring the material substantially fills the space between the scroll conveyor and the wall of the duct at least at the outlet end of the conveying line,
wherein the means is selected from,
(a) the scroll conveying line (6) or outlet (6C) is in communication with an element that restricts the flow of material from the outlet, and/or
(b) the scroll conveying line (6) is mounted at a gradient or a substantially vertical orientation, such that the outlet (6C) is positioned higher than the inlet (6D).

2. An apparatus according to claim 1 in which the scroll conveying line outlet (6C) opens into a shaft (8) which connects with the air conveying line (3) such that material entering the shaft can flow downwards and into the air conveying line (3).

3. An apparatus according to claim 2 in which a deflector (25) is located at the base of the shaft (8) against the shaft wall opposite to the direction of flow of air in the air conveying line (3).

4. An apparatus according to any preceding claim in which the outlet (6C) is in communication with a weir (19) over which the material must pass, in which the weir is optionally located in a position extended from the end of the scroll conveying line by means of a connecting element (20).

5. An apparatus according to any of claims 1 to 3 in which the outlet (6C) is in communication with a compression element (21), in which said compression element substantially covers the outlet and in which the compression element is held in place by means of a compression member (22), said compression member providing sufficient force to hold the compression element substantially over the outlet (6C), but to allow sufficient movement of the compression element to allow restricted flow of the material from the outlet.

6. An apparatus according to any of claims 1 to 3 in which the outlet (6C) is in communication with a flexible element (23), in which said flexible element substantially covers the outlet and in which the flexible element is mounted to the end of the scroll conveyor (6B) to hold the flexible element substantially over the outlet (6C), in which there is sufficient movement of the flexible element to allow restricted flow of the material from the outlet.

7. An apparatus according to any of claims 1 to 3 in which the outlet (6C) is in communication with a hinged flap (24), in which said hinged flap substantially covers the outlet and is held in position by means of gravity or a compression member which provides sufficient force to hold the hinged flap substantially over the outlet (6C), but to allow sufficient movement of the hinged flap to allow restricted flow of the material from the outlet.

8. An apparatus according to any preceding claim in which the pitch of the scroll conveyor (6B) reduces from the inlet to the outlet.

9. An apparatus according to any preceding claim in which make up unit comprises a material wetting head (9) for contacting the material with water, and a mixing vessel (14) in which in which the material is hydrated or dissolved to form a uniform aqueous dilution or aqueous solution.

10. An apparatus according to claim 9 in which the material wetting head (9) comprises:
a substantially vertical wetting duct (9A) which is open at its lower end,
a duct inlet which is at the upper end of the wetting duct (9A) and substantially coaxial with the duct,
in which material is supplied to the duct inlet from air conveying line (3),
water spray orifices positioned within the upper part of the wetting duct radially outwards of the duct inlet and arranged to direct sprays of water downwardly in the wetting duct to wet the particulate material, and
means for providing a supply of water to the water spray orifices.

## Patentansprüche

1. Verfahren zum Bilden einer wässrigen Verdünnung oder wässrigen Lösung eines wasserlöslichen oder wasserquellbaren Teilchenmaterials, wobei das Material ein wasserlösliches oder wasserquellbares Polymer mit einer gewichtsdurchschnittlichen Teilchengröße von nicht mehr als 2000 µm ist, umfassend: eine Aufbereitungseinheit (18),
eine Schneckenförderleitung (6), die einen Kanal (6A), der durch eine Wand definiert ist, und einen Schneckenförderer (6B) in dem Kanal umfasst, wobei die Schneckenförderleitung einen Einlass (6D), durch den Material eintritt, und einen Auslass (6C) aufweist, durch den das Material die Schneckenförderleitung verlässt, und eine Luftförderleitung (3), die einen Kanal umfasst, durch den ein Luftstrom das Material zu einer Aufbereitungseinheit (18) befördert, in der das Material hydratisiert oder gelöst wird, um eine wässrige Verdünnung oder wässrige Lösung zu bilden, **dadurch gekennzeichnet, dass**
die Luftförderleitung mit einem Luftdruck von mindestens 20 Millibar bereitgestellt ist, und dadurch, dass die Schneckenförderleitung (6) mit einem Mittel bereitgestellt ist, das sicherstellt, dass das Material den Zwischenraum zwischen dem Schneckenförderer und der Wand des Kanals mindestens an dem Auslassende der Förderleitung im Wesentlichen füllt, wobei das Mittel wie folgt ausgewählt wird:
(a) dass die Schneckenförderleitung (6) oder der Auslass (6C) mit einem Element verbunden sind, das den Materialstrom aus dem Auslass begrenzt, und/oder
(b) dass die Schneckenförderleitung (6) bei einem Gradienten oder einer im Wesentlichen vertikalen Ausrichtung derart befestigt ist, dass der Auslass (6C) höher angeordnet ist als der Einlass (6D).

2. Vorrichtung nach Anspruch 1, wobei sich der Schneckenförderleitungsauslass (6C) in einen Schacht (8) öffnet, der mit der Luftförderleitung (3) derart verbunden ist, dass Material, das in den Schacht eintritt, nach unten und in die Luftförderleitung (3) strömen kann.

3. Vorrichtung nach Anspruch 2, wobei ein Umlenkblech (25) an der Basis des Schachtes (8) gegen die Schachtwand entgegensetzt der Luftströmungsrichtung in der Luftförderleitung (3) angeordnet ist.

4. Vorrichtung nach einem der vorhergehenden Ansprüche, wobei der Auslass (6C) mit einem Wehr (19) verbunden wird, über welches das Material durchgeleitet werden muss, wobei das Wehr wahlweise in einer Position angeordnet ist, die sich von dem Ende der Schneckenförderleitung mittels eines Verbindungselements (20) erstreckt.

5. Vorrichtung nach einem der vorhergehenden Ansprüche 1 bis 3, wobei der Auslass (6C) mit einem Kompressionselement (21) verbunden ist, wobei das Kompressionselement den Auslass im Wesentlichen abdeckt und wobei das Kompressionselement mithilfe eines Kompressionsgliedes (22) arretiert wird, wobei das Kompressionsglied eine ausreichende Kraft bereitstellt, um das Kompressionselement im Wesentlichen über dem Auslass (6C) zu halten, jedoch eine ausreichende Bewegung des Kompressionselements ermöglicht, um einen begrenzten Strom des Materials aus dem Auslass zu ermöglichen.

6. Vorrichtung nach einem der Ansprüche 1 bis 3, wobei der Auslass (6C) mit einem flexiblen Element (23) verbunden ist, wobei das flexible Element den Auslass im Wesentlichen abdeckt und wobei das flexible Element an dem Ende des Schneckenförderers (6B) befestigt ist, um das flexible Element im Wesentlichen über dem Auslass (6C) zu halten, wobei eine ausreichende Bewegung des flexiblen Elements vorhanden ist, um einen begrenzten Strom des Materials aus dem Auslass zu ermöglichen.

7. Vorrichtung nach einem der vorhergehenden Ansprüche 1 bis 3, wobei der Auslass (6C) mit einer Scharnierklappe (24) verbunden ist, wobei die Scharnierklappe den Auslass im Wesentlichen abdeckt und mittels Schwerkraft oder eines Kompressionsglieds arretiert ist, das eine ausreichende Kraft bereitstellt, um die Scharnierklappe im Wesentlichen über dem Auslass (6C) zu halten, jedoch eine ausreichende Bewegung der Scharnierklappe ermöglicht, um einen begrenzten Strom des Materials aus dem Auslass zu ermöglichen.

8. Vorrichtung nach einem der vorhergehenden Ansprüche, wobei sich die Steigung des Schneckenförderers (6B) von dem Einlass zu dem Auslass verringert.

9. Vorrichtung nach einem der vorhergehenden Ansprüche, wobei die Aufbereitungseinheit einen Materialbenetzungskopf (9), um das Material mit Wasser in Kontakt zu bringen, und einen Mischbehälter (14) umfasst, in dem das Material hydratisiert oder gelöst wird, um eine gleichförmige wässrige Verdünnung oder wässrige Lösung zu bilden.

10. Vorrichtung nach Anspruch 9, wobei der Materialbenetzungskopf (9) Folgendes umfasst:
einen im Wesentlichen vertikalen Benetzungskanal (9A), der an seinem unteren Ende offen ist,
einen Kanaleinlass, der sich an dem oberen Ende des Benetzungskanals (9A) und im Wesentlichen koaxial mit dem Kanal befindet,
wobei Material von der Luftförderleitung (3) zu dem Kanaleinlass geleitet wird, Wasserstrahlöffnungen in dem oberen Teil des Benetzungskanals radial außerhalb des Kanaleinlasses positioniert und angeordnet sind, um Wasserstrahle nach unten in dem Benetzungskanal zu lenken, um das teilchenförmige Material zu benetzen, und
Mittel zum Bereitstellen einer Wasserzufuhr zu den Wasserstrahlöffnungen.

## Revendications

1. Appareil pour former une dilution aqueuse ou une solution aqueuse d'une matière particulaire soluble dans l'eau ou gonflable dans l'eau, dans laquelle la matière est un polymère soluble dans l'eau ou gonflable dans l'eau ayant une taille de particule moyenne en poids ne dépassant pas 2000 µm, comprenant :
une unité de formation (18),
une ligne de transport à vis (6) comprenant un conduit (6A) défini par une paroi et un transporteur à vis (6B) à l'intérieur dudit conduit, la ligne de transport à vis ayant une entrée (6D) à travers laquelle entre la matière et
une sortie (6C) à travers laquelle la matière sort de la ligne de transport à vis, et
une ligne de transport d'air (3) comprenant un conduit à travers lequel un flux d'air transporte la matière jusqu'à l'unité de formation (18) dans laquelle la matière est hydratée ou dissoute pour former une dilution aqueuse ou une solution aqueuse, **caractérisé en ce que**
la ligne de transport d'air est pourvue d'une pression d'air d'au moins 20 mbar et **en ce que** la ligne de transport à vis (6) est pourvue d'un moyen pour garantir que la matière remplit substantiellement l'espace entre le transporteur à vis et la paroi du conduit au moins au niveau de l'extrémité de sortie de la ligne de transport,
le moyen étant choisi parmi ce qui suit :
(a) la ligne de transport à vis (6) ou la sortie (6C) est en communication avec un élément qui limite l'écoulement de matière depuis la sortie, et/ou
(b) la ligne de transport à vis (6) est montée de manière inclinée ou suivant une orientation substantiellement verticale de telle sorte que la sortie (6C) soit positionnée plus haut que l'entrée (6D).

2. Appareil selon la revendication 1, dans lequel la sortie (6C) de la ligne de transport à vis s'ouvre sur un arbre (8) qui est connecté à la ligne de transport d'air (3) de telle sorte que la matière entrant dans l'arbre puisse s'écouler vers le bas jusqu'à la ligne de transport d'air (3).

3. Appareil selon la revendication 2, dans lequel un déflecteur (25) est situé à la base de l'arbre (8) contre la paroi de l'arbre opposée à la direction d'écoulement de l'air dans la ligne de transport d'air (3).

4. Appareil selon l'une quelconque des revendications précédentes, dans lequel la sortie (6C) est en communication avec un déversoir (19) par-dessus lequel doit passer la matière, le déversoir étant en option situé dans une position s'étendant depuis l'extrémité de la ligne de transport à vis au moyen d'un élément de connexion (20).

5. Appareil selon l'une quelconque des revendications 1 à 3, dans lequel la sortie (6C) est en communication avec un élément de compression (21), ledit élément de compression couvrant substantiellement la sortie et l'élément de compression étant maintenu en position au moyen d'un organe de compression (22), ledit organe de compression assurant une force suffisante pour maintenir l'élément de compression substantiellement par-dessus la sortie (6C), mais permettant un mouvement suffisant de l'élément de compression de manière à permettre un écoulement restreint de la matière depuis la sortie.

6. Appareil selon l'une quelconque des revendications 1 à 3, dans lequel la sortie (6C) est en communication avec un élément flexible (23), ledit élément flexible couvrant substantiellement la sortie et l'élément flexible étant monté à l'extrémité du transporteur à vis (6B) de manière à retenir l'élément flexible substantiellement par-dessus la sortie (6C), un mouvement suffisant de l'élément flexible permettant un écoulement restreint de la matière depuis la sortie.

7. Appareil selon l'une quelconque des revendications 1 à 3, dans lequel la sortie (6C) est en communication avec un volet articulé (24), ledit volet articulé couvrant substantiellement la sortie et étant maintenu en position sous l'effet de la gravité ou au moyen d'un organe de compression qui fournit une force suffisante pour retenir le volet articulé substantiellement pardessus la sortie (6C), mais permettant un mouvement suffisant du volet articulé pour permettre un écoulement restreint de la matière depuis la sortie.

8. Appareil selon l'une quelconque des revendications précédentes, dans lequel le pas du transporteur à vis (6B) diminue depuis l'entrée jusqu'à la sortie.

9. Appareil selon l'une quelconque des revendications précédentes, dans lequel l'unité de formation comprend une tête de mouillage de matière (9) destinée à mettre la matière en contact avec de l'eau, et un récipient mélangeur (14) dans lequel la matière est hydratée ou dissoute de manière à former une dilution aqueuse ou une solution aqueuse uniformes.

10. Appareil selon la revendication 9, dans lequel la tête de mouillage de matière (9) comprend :
un conduit de mouillage substantiellement vertical (9A) qui est ouvert au niveau de son extrémité inférieure,
une entrée de conduit qui est à l'extrémité supérieure du conduit de mouillage (9A) et qui est substantiellement coaxiale avec le conduit,
la matière étant alimentée à l'entrée du conduit depuis la ligne de transport d'air (3),
des orifices de pulvérisation d'eau positionnés à l'intérieur de la partie supérieure du conduit de mouillage radialement vers l'extérieur de l'entrée du conduit et agencés de manière à orienter des jets d'eau vers le bas dans le conduit de mouillage pour mouiller la matière particulaire, et
des moyens pour fournir une alimentation d'eau aux orifices de pulvérisation d'eau.
